# EUROPÄISCHE PATENTSCHRIFT

(11) **EP 3 655 256 B1**
(45) Veröffentlichungstag und Bekanntmachung des Hinweises auf die Patenterteilung: **05.04.2023**
(21) Anmeldenummer: 18740512.1
(22) Anmeldetag: 24.05.2018
(51) Int. Cl.: B60B 27/00

(54) **RADNABE UND EIN SYSTEM AUS RADNABE UND BREMSELEMENT**
WHEEL HUB AND A SYSTEM FORMED OF WHEEL HUB AND BRAKE ELEMENT
MOYEU DE ROUE ET SYSTÈME CONSTITUÉ D'UN MOYEU DE ROUE ET D'UN ÉLÉMENT DE FREINAGE

(30) Priorität: 18.07.2017 DE 102017116132; 19.07.2017 DE 102017116309
(43) Veröffentlichungstag der Anmeldung: 27.05.2020
(73) Patentinhaber: SAF-HOLLAND GmbH, 63856 Bessenbach (DE)
(72) Erfinder: BRUNSCH, Bernd, 63303 Dreieich (DE); MATTERN, Jonas, 63755 Alzenau (DE); ARPACI, Muhammet, 63768 Hösbach (DE); WEBER, Elmar, 48249 Dülmen (DE)
(74) Vertreter: Müller Schupfner & Partner Patent- und Rechtsanwaltspartnerschaft mbB
(86) Internationale Anmeldenummer: PCT/EP2018/063633
(87) Internationale Veröffentlichungsnummer: WO 2019/015831

(56) Entgegenhaltungen:
- EP-A2- 0 849 487
- EP-A2- 0 906 855
- WO-A1-02/087901
- DE-A1-102013 113 550
- DE-B3-102004 034 361

## Beschreibung

Die vorliegende Erfindung betrifft eine Radnabe und ein System aus einem Bremselement und einer Radnabe.

Radnaben sind aus dem Stand der Technik hinlänglich bekannt. Sie dienen der Anbindung eines Rads an ein Achselement, beispielsweise an eine Achse eines Nutzfahrzeugs. Hierbei werden üblicherweise Bremselement, wie z. B. Bremsscheiben oder Bremstrommeln, drehfest an die Radnabe angebunden. Typischerweise werden Bremsscheiben mittels in die Radnabe eingreifender Schrauben axial fixiert. Diese axiale Fixierung mittels der Schraube führt hierbei zu einer kraftschlüssigen Verbindung an einer Schnittstelle zwischen der Radnabe und der an der Radnabe anliegenden Bremsscheibe. Um den im Betrieb auftretenden Belastungen gerecht zu werden, werden im Stand der Technik vergleichsweise hohe Anforderungen an ein Befestigungsmittel gestellt, mit dem die Bremsscheibe an der Radnabe axial fixiert wird.

Die DE 10 2013 113 550 A1 betrifft eine Anordnung einer Bremsscheibe an einer Radnabe eines Nutzfahrzeugs, wobei die Radnabe einen mindestens ein Wälzlager aufnehmenden Nabenkörper und einen Radträger aufweist.

Die DE 10 2004 034 361 B3 zeigt eine Radnabe eines Kraftfahrzeugs mit einem Polrad und einer mit der Radnabe verbundenen Bremsscheibe.

Die EP 0 849 487 A2 betrifft eine Anordnung einer aus einer Bremsscheibennabe und einem sich von dieser radial nach außen erstreckenden Reibring bestehenden Bremsscheibe an einer Radnabe, insbesondere von Nutzfahrzeugen, die drehbar auf einem Achsschenkel gelagert ist.

Die EP 0 906 855 A2 betrifft eine Anordnung zum drehbaren Halten einer Felge und einer Bremsscheibe an einem Achsstummel, wobei die Felge und die Bremsscheibe zur gemeinsamen Drehung miteinander gekoppelt sind.

Es ist eine Aufgabe der vorliegenden Erfindung eine Radnabe bereitzustellen, die eine gegenüber dem Stand der Technik verbesserte Schnittstelle zur Anbindung eines Bremselements, insbesondere in Hinblick auf eine Belastbarkeit der Schnittstelle, aufweist.

Diese Aufgabe wird gelöst durch eine Radnabe gemäß Anspruch 1, ein Bremselement gemäß Anspruch 14 und ein System aus einem Bremselement und einer Radnabe gemäß Anspruch 15. Weitere Vorteile und Merkmale der Erfindung ergeben sich aus den Unteransprüchen sowie der Beschreibung und den beigefügten Figuren.

Erfindungsgemäß ist eine Radnabe, insbesondere Radnabe für ein Nutzfahrzeug, vorgesehen, umfassend:
- eine Bremselementanlagefläche, an der in einem montierten Zustand ein Bremselement, insbesondere eine Bremsscheibe oder eine Bremstrommel, anliegt und
- ein Formschlussmittel, das im montierten Zustand in Umlaufrichtung gesehen formschlüssig mit dem Bremselement zusammenwirkt, und/oder
- einen Aufnahmebereich für ein Formschlussmittel, das im montierten Zustand in Umlaufrichtung gesehen formschlüssig mit dem Bremselement zusammenwirkt. Gegenüber dem Stand der Technik ermöglicht die erfindungsgemäße Radnabe zusätzlich zur reibschlüssigen Verbindung an der Schnittstelle zwischen der Radnabe und dem an der Radnabe anliegenden Bremselement, einen Formschluss zwischen dem Bremselement und der Radnabe in Umlaufrichtung. Dieser Formschluss verbessert die Aufnahme von im Betrieb der Radnabe auftretenden Bremsmomenten. Dies bringt mitunter auch den Vorteil mit sich, dass eine axiale Fixierung des Bremselements an die Radnabe mittels eines Befestigungselements, wie einer Schraube, entlastet wird. Infolgedessen ist es auch möglich, die Anzahl an erforderlichen Befestigungsmitteln zu reduzieren, da sich erfindungsgemäß die Funktionalität der Befestigungsmittel im Wesentlichen auf eine axiale Sicherung des Bremselements beschränkt. Grundsätzlich ist unter der Umlaufrichtung diejenige Richtung zu verstehen, entlang der sich ein Volumenelement der Radnabe bewegt, wenn es im Betrieb der Radnabe um eine Radachse rotiert. Dabei ist es vorzugsweise vorgesehen, dass das Formschlussmittel derart ausgerichtet ist, dass das Formschlussmittel beim Bremsen, insbesondere beim Abbremsen eines in Vorwärtsrichtung fahrenden Fahrzeugs, mit dem Bremselement zusammenwirkt. Vorzugsweise weist das Bremselement ein bremselementseitiges Formschlussmittel auf, das komplementär zum Formschlussmittel der Radnabe ausgestaltet ist. In anderen Worten kann daher das bremselementseitige Formschlussmittel einteilig mit dem Bremselement und/oder das Formschlussmittel der Radnabe einteilig mit der Radnabe ausgestaltet sein. Um eine besonders sichere und dauerfeste Drehmomentübertragung zu erreichen, sollte das bremselementseitige Formschlussmittel das Formschlussmittel der Radnabe, insbesondere unmittelbar, kontaktieren. Ein weiterer Vorteil des Formschlussmittels ist, dass sich das Bremselement bei der Montage positionsfest ausrichten lässt. D. h. das Bremselement nimmt gegenüber der Radnabe eine festgelegte Position, insbesondere Winkelstellung, ein. Beispielsweise gerät das Formschlussmittel der Radnabe mit dem bremselementseitigen Formschlussmittel in Anlage, sobald das Bremselement die vorgesehene Position bzw. Winkelstellung eingenommen hat. Diese Ausrichtung kann beispielsweise bei der Montage des Bremselements hilfreich sein, um Löcher in dem Bremselement mit für das Befestigungsmittel vorgesehenen Primäraussparungen axial in Deckung zu bringen. Weiterhin lässt sich mittels einer Form bzw. Kontur des Formschlussmittels festlegen, welches Bremselement zusammen mit der Radnabe verwendet werden kann. Dies verhindert mit Vorteil, dass versehentlich ein ungeeignetes Bremselement an der Radnabe befestigt wird. Weiterhin ist es vorstellbar, dass das Formschlussmittel zusätzlich in radialer Richtung mit dem Bremselement formschlüssig zusammenwirkt.

Gemäß einer weiteren Ausführungsform ist es vorgesehen, dass das Formschlussmittel im Bereich der Bremselementanlagefläche angeordnet ist oder Teil der Bremselementanlagefläche ist. Dabei ist es vorzugsweise vorgesehen, dass das Bremselement an der Bremselementanlagefläche mittels eines Befestigungsmittels, beispielsweise einer Schraube, fixiert wird. Dadurch ist das Formschlussmittel mit Vorteil in dem Bereich angeordnet, in dem auch die axiale Fixierung des Bremselements erfolgt. Da das Bremselement im montierten Zustand ohnehin an der Bremselementanlagefläche anliegt, erweist sich die Ausbildung des Formschlussmittels an der Bremselementanlagefläche als vorteilhaft, da dadurch keine zusätzliche Ausformung an der Radnabe zur Ausbildung des Formschlussmittels erforderlich ist. Unter Bereich der Bremselementanlagefläche ist insbesondere derjenige Bereich zu verstehen, der sich unmittelbar in axialer Richtung gesehen an die Bremselementanlagefläche anschließt und sich im Wesentlichen bis zu 10 %, bevorzugt bis zu 5 % der Gesamtausdehnung der Radnabe in axialer Richtung erstreckt. Hierdurch lässt sich eine besonders kompakte Bauart erzielen.

Vorzugsweise ist es vorgesehen, dass die Bremselementanlagefläche in axialer Richtung gesehen gegenüber einer - vorzugsweise zur Fahrzeuginnenseite bzw. gleichen Seite wie die Bremselementanlagefläche gerichteten - Stirnseite der Radnabe um eine Distanz versetzt ist, wobei ein Verhältnis zwischen dieser Distanz und einer in axialer Richtung bemessenen Gesamtlänge einen Wert zwischen 0,05 und 0,5, bevorzugt zwischen 0,15 und 0,4 und besonders bevorzugt zwischen 0,28 und 0,38 annimmt.

In einer weiteren Ausführungsform ist es vorgesehen, dass das Formschlussmittel als Absatz, als Bund und/oder als Nut in der Radnabe, insbesondere in der Bremselementanlagefläche, ausgebildet ist. Ein Absatz, ein Bund und/oder eine Nut lassen sich in vorteilhafter Weise vergleichsweise einfach herstellen, beispielsweise indem man die Bremselementanlagefläche spanend bearbeitet. Dabei bilden der Absatz, der Bund bzw. die Nut Formschlussflächen aus, die im montierten Zustand an komplementären bremselementseitigen Formschlussmittel anliegen und mit diesen in Umlaufrichtung gesehen formschlüssig zusammenwirken. Vorzugsweise sind die Absätze bzw. die Formschlussflächen derart ausgerichtet, dass die Absätze bzw. Formschlussflächen beim Bremsen mit dem Bremselement in Umlaufrichtung gesehen zusammenwirken.

Zweckmäßig ist es vorgesehen, dass ein Verhältnis zwischen einer Absatzhöhe und/oder Nuttiefe und einer in im montierten Zustand axial bemessenen Dicke des Bremselements einen Wert zwischen 0,15 und 0,75, bevorzugt zwischen 0,23 und 0,55 und besonders bevorzugt zwischen 0,34 und 0,46 annimmt. Mit dem Verhältnis zwischen 0,23 und 0,55 wird eine Absatzhöhe bzw. Nuttiefe bereitgestellt, die ein ausreichend große Formschlussfläche bereitstellt, um das Bremsmoment vom Bremselement aufzunehmen. Das Verhältnis von 0,34 bis 0,46 erlaubt einen vergleichsweise geringen Abtrag von der Bremselementanlagefläche, so dass sich das Formschlussmittel einfach und schnell herstellen lässt.

In einer weiteren Ausführungsform der vorliegenden Erfindung ist es vorgesehen, dass sich ein gemeinsamer Kantenverlauf entlang der Umlaufrichtung gesehen über mehrere Absätze erstreckt. Unter einem gemeinsamen Kantenverlauf ist vorzugsweise eine gedachte Linie bzw. umgebende Kontur zwischen den radial außenliegenden Kanten des Absatzes, der Nut oder des Bundes zu verstehen, die sich über mehrere Absätze bzw. Bremselementanlageflächen hinweg erstreckt. Vorzugsweise ist der gemeinsame Kantenverlauf ein Kreis. Es ist aber auch eine elliptische oder teilkreisförmige Ausbildung vorstellbar. Mittels eines gemeinsamen Kantenverlaufs, der sich über mehrere Absätze erstreckt, lässt sich mit Vorteil eine eindeutige Ausrichtung des Bremselements gegenüber der Radnabe festlegen, da sich die Absätze wegen ihrer Eigenschaft als gemeinsames Formschlussmittel von Absatz zu Absatz voneinander unterscheiden. Alternativ ist auch vorstellbar, dass jeder Absatz ein eigenes Formschlussmittel bereitstellt. Dadurch lässt sich eine der Anzahl der Absätze entsprechende Anzahl von möglichen Orientierungen des Bremselements gegenüber der Radnabe realisieren.

Bevorzugt umschließt der Kantenverlauf bzw. die die Formschlussmittel umgebende Kontur die Rotationsachse zumindest bereichsweise, bevorzugt vollständig. Hierdurch kann eine besonders sichere Drehmomentübertragung stattfinden. Bevorzugt ist der Kantenverlauf dabei ein Kreis, denn hierdurch kann dieser und das zugehörige Formschlussmittel besonders einfach, insbesondere durch Drehen, hergestellt werden, sodass Kosten gespart werden können.

Zweckmäßig ist es vorgesehen, dass das Formschlussmittel in Umlaufrichtung gesehen unterbrochen ist. Dies gestattet mit Vorteil die Ausbildung von Freiräumen zwischen den einzelnen Absätzen bzw. Bremselementanlagefläche, wodurch sich das Gesamtgewicht der Radnabe reduzieren lässt. Vorzugsweise beschränkt sich das Formschlussmittel in Umlaufrichtung gesehen auf die Bremselementanlagenflächen, so dass keine zusätzliche bauliche Ausformung an der Radnabe für das Formschlussmittel erforderlich ist. Alternativ ist es auch vorstellbar, dass sich das Formschlussmittel über mehrere Bremselementanlageflächen und zwischen diesen erstreckt. Dadurch lässt sich ein höheres Bremsmoment vom Formschlussmittel aufnehmen, da der Formschluss nicht länger auf den Bereich einer einzelnen Bremselementanlagefläche beschränkt ist.

Gemäß einer weiteren Ausführungsform ist es vorgesehen, dass zur Kraftverstärkung bei einer Verdrehung des Bremselements, insbesondere um eine Rotationsachse, das Formschlussmittel ein sich in Umlaufrichtung erstreckenden Kantenverlauf, der exzentrisch zur Rotationsachse verläuft, aufweist. Dadurch lässt sich ein Absatz bzw. eine Formschlussfläche bereitstellen, der gegenüber der Umlaufrichtung keilförmig verläuft. Folge ist, dass bei einer Bremsung das Bremsmoment zu einer weiteren Verkeilung von Bremselement und Radnabe führt, so dass die Formschlussfläche das beim Bremsen veranlasste Bremsmoment zumindest teilweise aufnehmen kann.

In einer weiteren Ausführungsform ist es vorgesehen, dass ein dem Kantenverlauf zugeordneter Mittelpunkt um eine Exzentrizität zur Rotationsachse versetzt ist.

Hierdurch kann eine besonders einfach herzustellende und sichere Formschlussverbindung hergestellt werden.

Bevorzugt nimmt das Verhältnis zwischen der Exzentrizität zur in radialer Richtung bemessenen Erstreckung der Bremselementanlagefläche einen Wert zwischen 0,2 und 0,8, bevorzugt zwischen 0,6 und 0,8 und besonders bevorzugt zwischen 0,7 und 0,8 an. Dadurch lässt sich mit Vorteil eine möglichst große Exzentrizität realisieren, bei der gleichzeitig alle Absätze auf der Bremselementanlagefläche abschließen und zum gemeinsamen Kantenverlauf beitragen. Insbesondere für das Verhältnis zwischen 0,7 und 0,8 hat sich herausgestellt, dass alle Absätze eine ausreichende Stabilität bzw. Dicke besitzen, um im Falle eines auftretenden Bremsmomentes dieses aufzunehmen.

Zweckmäßig ist es vorgesehen, dass der Aufnahmebereich als Rücksprung in der Radnabe ausgestaltet ist, der sich entlang der Umlaufrichtung erstreckt und dessen Bodenfläche ein Kantenverlauf zuzuordnen ist, der exzentrisch zur Rotationsachse verläuft, und/oder, der in Umlaufrichtung gesehen einen Anschlag bereitstellt. Vorzugsweise erstreckt sich der als Rücksprung in der Radnabe ausgestaltete Aufnahmebereich in Umlaufrichtung gesehen über mehrere Bremselementanlageflächen und/oder liegt in axialer Richtung versetzt dazu. Weiterhin ist es mit Vorteil vorgesehen, dass der Aufnahmebereich zum passgenauen Anordnen des Formschlussmittels vorgesehen ist. Mittels des exzentrischen Kantenverlaufs der Bodenfläche lässt sich in einer Bremssituation das auftretende Bremsmoment über das Formschlussmittel auf die Bodenfläche und damit auf die Radnabe übertragen. Dabei verklemmt bzw. verkeilt das Formschlussmittel vorzugsweise mit dem Aufnahmebereich und einem bremselementseitigen Aufnahmebereich des Bremselements. Weiterhin ist der Aufnahmebereich mit Vorteil derart ausgestaltet, dass unabhängig von einer Rotationsrichtung bzw. einer Richtung des Bremsmoments ein Formschluss in Umlaufrichtung erfolgen kann. Hierzu ist der Aufnahmebereich symmetrisch ausgestaltet. Es ist aber auch vorstellbar, dass der Aufnahmebereich an den Umstand angepasst ist, dass ein Bremsen bei einer Rückwärtsfahrt regelmäßig ein geringeres Bremsmoment entstehen lässt, und ist entsprechend in Umlaufrichtung gesehen asymmetrisch ausgestaltet.

In einer weiteren Ausführungsform ist es vorgesehen, dass ein Verhältnis zwischen einer sich in Umlaufrichtung bemessene Länge des Aufnahmebereichs zum Gesamtumfang der Radnabe auf derselben Höhe einen Wert zwischen 0,2 und 0,7, bevorzugt zwischen 0,4 und 0,6 und besonders bevorzugt zwischen 0,45 und 0,55 annimmt. Dadurch lässt sich ein vergleichsweise langer Aufnahmebereich realisieren, der es erlaubt, dass das aufgenommene Bremsmoment auf eine entsprechende Fläche zu verteilen.

Erfindungsgemäß ist es vorgesehen, dass eine Primäraussparung zur axialen Fixierung des Bremselements vorgesehen ist, wobei die Primäraussparung in der Bremselementanlagefläche mündet. Beispielsweise ist zur axialen Fixierung ein Befestigungsmittel, beispielsweise eine Schraube, vorgesehen, das im montierten Zustand durch das Bremselement hindurchgreift und in die Primäraussparung eingreift. Durch die axiale Fixierung des Bremselements wird mit Vorteil sichergestellt, dass ein Formschluss in Umlaufrichtung gesehen zwischen dem Bremselement und dem Formschlussmittel aufrechterhalten bleibt. Dabei ist es bei der Montage vorgesehen, dass das Bremselement zunächst derart ausgerichtet wird, dass der in Umlaufrichtung gesehene Formschluss zwischen Formschlussmittel und bremselementseitigen Formschlussmittel gebildet wird und anschließend die axiale Fixierung des Bremselements mittels des Befestigungsmittels erfolgt.

Vorteilhafterweise weist die Radnabe eine Mehrzahl von Primäraussparungen auf, wobei die Primäraussparungen auf einer Kreisbahn angeordnet sind, und wobei diese Kreisbahn exzentrisch zur Rotationsachse ausgebildet ist. Hierdurch kann eine Asymmetrie der Bremselementanordnung erreicht werden, welche insbesondere eine Entzerrung von Moden erreicht, sodass insbesondere Schwingungsinstabilitäten reduziert und/oder verhindert werden können. Besonders bevorzugt ist es, wenn die Exzentrizität der Primäraussparungen die gleiche ist, wie die der Formschlussmittel. Hierdurch wird eine besonders gleichmäßige Belastung der Radnabe und/oder des Bremselements erreicht.

Vorzugsweise ist eine Radnabe vorgesehen, weiter umfassend einen in radialer Richtung gesehen außenliegenden Kragenbereich und einen in radialer Richtung gesehen innenliegenden Kernbereich, wobei in axialer Richtung gesehen der innenliegende Kernbereich dicker als der außenliegende Kragenbereich ist, und wobei die Radnabe im innenliegenden Kernbereich die im Wesentlichen axial verlaufende Primäraussparung zur Anbindung eines Bremselement aufweist. Dadurch lassen sich mit Vorteil höhere Verspannkräfte realisieren, die wiederum höhere Bremsmomente ermöglichen. Zudem lassen sich thermische Effekte, veranlasst durch die Wärmeentwicklung im Bremselement beim Bremsen, im Vergleich zu Radnaben, deren Primäraussparungen zur Anbindung des Bremselements geringere Klemmlängen zulassen, wirkungsvoller kompensieren. Grundsätzlich ist unter einem Kragenbereich ein ringscheibenförmiger bzw. bordürenförmiger Abschluss der Radnabe zu verstehen. Im montierten Zustand der Radnabe bildet der Kragenbereich den äußersten Umfangsbereich der Radnabe, mit dem die Radnabe vorzugsweise in radialer Richtung und axialer Richtung gesehen zu einer Seite hin abschließt. Vorteilhafterweise ist der Kragenbereich als Anschlussbereich für eine Radfelge ausgebildet bzw. dient der Anordnung einer Radfelge. Beispielsweise nimmt das Verhältnis der radialen Erstreckung des Kragenbereichs zum Durchmesser der Radnabe einen Wert zwischen 0,1 und 0,3, bevorzugt zwischen 0,15 und 0,25 und besonders bevorzugt zwischen 0,21 und 0,24 an. Dabei ist der Kragenbereich im montierten Zustand der Sichtseite des Fahrzeugs zugewandt. Insbesondere ist es vorgesehen, dass der Kragenbereich in radialer Richtung gesehen im Wesentlichen eine in axialer Richtung bemessene konstante Dicke aufweist. Hierbei wird insbesondere unter einer Dicke diejenige Ausdehnung des Kragenbereichs verstanden, die von dem im Betrieb um eine Rotationsachse rotierenden Kragenbereich in Anspruch genommen wird. Dadurch bleiben etwaige lokale Rücksprünge bei der Bestimmung der Dicke unberücksichtigt. Weiterhin ist es vorgesehen, dass der Kernbereich in radialer Richtung gesehen seine axial bemessene Dicke verändert. Vorzugsweise umfasst der Kernbereich einen zentralen Hohlraum, der zur Aufnahme eines Achselements vorgesehen ist. Dabei ist der Kernbereich insbesondere zur Anlage an das Achselement vorgesehen und ummantelt im montierten Zustand das Achselement, beispielsweise einen Achsstummel, zumindest bereichsweise. Weiterhin ist es bevorzugt vorgesehen, dass der Kernbereich und der Kragenbereich unmittelbar in radialer Richtung aneinander anschließen bzw. in einander übergehen. Bevorzugt ist es vorgesehen, dass das Verhältnis der radialen Erstreckung des Kernbereichs zum Durchmesser der Radnabe einen Wert zwischen 0,3 und 0,7, bevorzugt zwischen 0,35 und 0,55 und besonders bevorzugt zwischen 0,4 und 0,5 annimmt. Vorzugsweise ist es vorgesehen, dass es sich bei der Primäraussparung um eine Bohrung, insbesondere eine Durchgangsbohrung handelt. Weiterhin ist es vorzugsweise vorgesehen, dass die Radnabe zur Anbindung eines flachen Bremselements, beispielsweise eines in axialer Richtung 1 bis 3 cm dicken Bremsscheibe, vorgesehen ist. Denkbar ist auch, dass die Primäraussparung in der der Rotationsachse zugewandten Hälfte, bevorzugt in einem der Rotationsachse zugewandten ersten Drittel oder besonders bevorzugt in einem der Rotationsachse zugewandten ersten Viertel des Kernbereichs oder der Radnabe angeordnet ist.

Insbesondere ist es vorgesehen, dass die Radnabe einstückig bzw. integral ausgebildet ist, d. h. die Radnabe ist nicht aus mehreren Bestandteilen zusammengesetzt, sondern Bremselement, Achse und Rad bzw. Radfelge lassen sich an ein einstückiges Bauteil, d. h. die Radnabe, anbinden. Beispielswiese ist die Radnabe einstückig geschmiedet oder gegossen

Gemäß einer weiteren Ausführungsform ist es vorgesehen, dass der Kernbereich im Wesentlichen radial verlaufende Rippenelemente umfasst, wobei insbesondere an einer Stirnseite des Rippenelements die Bremselementanlagefläche angeordnet ist. Unter "im Wesentlichen radial verlaufend" ist in diesem Zusammenhang zu verstehen, dass die Rippenelemente einen Winkel von maximal 10°, bevorzugt von maximal 5° und besonders bevorzugt von maximal 2° mit der idealen radialen Richtung bilden dürfen. Die radiale Richtung ist dabei die radiale Richtung zur Rotationsachse der Radnabe. Besonders zweckmäßig ist es, um eine kompakte Radnabe zu erreichen, wenn die Rippenelemente die Primäraussparungen aufweisen.

Besonders bevorzugt ist es, um eine kompakte und bauraumsparende Radnabe zu erreichen, wenn die Rippenelemente einen Teil des Kernbereichs ausbilden und/oder den Kernbereich mit dem Kragenbereich, insbesondere ausschließlich, verbinden. Unter "verbinden" kann dabei unter anderem verstanden werden, dass die Rippenelemente, insbesondere ausschließlich, für die Kraft- und/oder Momentenübertragung zwischen dem Kernbereich und dem Kragenbereich ausgelegt bzw. verantwortlich sind.

Zweckmäßigerweise umschließt jedes Rippenelement genau eine Primäraussparung. Dadurch lassen sich im Vergleich zu den alternativ bevorzugten Rippenelementen mit mehreren Primäraussparungen schmalere Rippenelemente realisieren. Vorzugsweise münden die Rippenelemente in Umlaufrichtung gesehen mittig in einem Bereich zwischen zwei zueinander benachbarten Sekundäraussparungen. Vorzugsweise sind die Primäraussparungen in radialer Richtung gesehen in dem Bereich des Rippenelements angeordnet, in dem die Rippenelemente, insbesondere dem Rippenelement zugeordnete Mantelaußenflächen, im Wesentlichen axial zur Radachse verlaufen. Mit anderen Worten: Die Primäraussparung ist in das Rippenelement an deren dem Kragenbereich angewandten Ende der Radachse eingelassen.

Erfindungsgemäß ist ebenfalls ein Bremselement für eine Radnabe, insbesondere für eine erfindungsgemäß Radnabe, vorgesehen, wobei das Bremselement ein bremselementseitiges Formschlussmittel aufweist, das im montierten Zustand in Umlaufrichtung gesehen formschlüssig mit der Radnabe zusammenwirkt. Alle für die erfindungsgemäße Radnabe beschriebenen Merkmale und deren Vorteile lassen sich sinngemäß ebenfalls auf das erfindungsgemäße Bremselement für die Radnabe übertragen und andersherum.

Erfindungsgemäß ist ebenfalls ein System aus einem Bremselement und einer Radnabe vorgesehen, wobei die Radnabe, insbesondere eine Radnabe für ein Nutzfahrzeug, eine Bremselementanlagefläche, an der in einem montierten Zustand ein Bremselement anliegt, und ein Formschlussmittel, das im montierten Zustand in Umlaufrichtung gesehen formschlüssig mit dem Bremselement zusammenwirkt, und/oder einen Aufnahmebereich für ein Formschlussmittel, das im montierten Zustand in Umlaufrichtung gesehen formschlüssig mit dem Bremselement zusammenwirkt, aufweist, wobei das Formschlussmittel im montierten Zustand mit einem bremselementseitigen Formschlussmittel, insbesondere einem zum Formschlussmittel der Radnabe komplementär ausgestalteten bremselementseitigen Formschlussmittel, zusammenwirkt. Alle für die erfindungsgemäße Radnabe beschriebenen Merkmale und deren Vorteile lassen sich sinngemäß ebenfalls auf das erfindungsgemäße System aus das Bremselement und der Radnabe übertragen und andersherum.

Weitere Vorteile und Merkmale ergeben sich aus der nachfolgenden Beschreibung bevorzugter Ausführungsformen des erfindungsgemäßen Gegenstands mit Bezug auf die beigefügten Figuren. Es zeigt:
- **Fig.1a bis 1c:**: eine Radnabe gemäß einer ersten beispielhaften Ausführungsform der vorliegenden Erfindung,
- **Fig.2a bis 2c:**: eine Radnabe gemäß einer zweiten beispielhaften Ausführungsform der vorliegenden Erfindung,
- **Fig. 3a und 3b**: eine Radnabe gemäß einer dritten beispielhaften Ausführungsform der vorliegenden Erfindung,
- **Fig. 4a bis 4c**: eine Radnabe gemäß einer dritten beispielhaften Ausführungsform der vorliegenden Erfindung und
- **Fig. 5a bis 5c**: eine Radnabe gemäß einer vierten beispielhaften Ausführungsform der vorliegenden Erfindung.

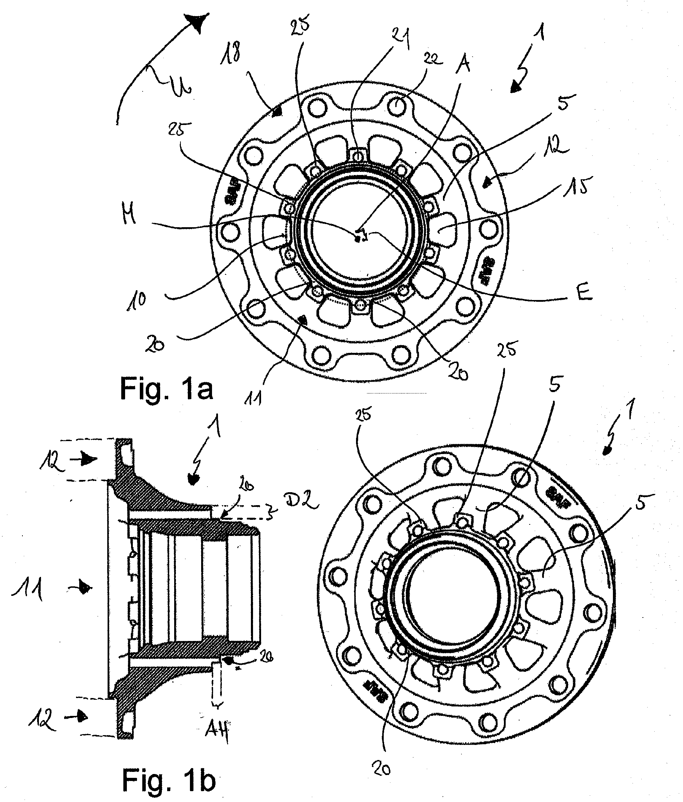

In den **Figuren 1a** **bis 1c** ist eine Radnabe 1 gemäß einer ersten beispielhaften Ausführungsform der vorliegenden Erfindung dargestellt. Dabei sind in der Figur 1a eine Draufsicht in axialer Richtung und in der Figur 1b eine Schnittansicht längs der axialen Richtung (links) und eine perspektivische Ansicht (rechts) illustriert. Eine solche Radnabe 1 dient dazu, ein Rad an einem Achselement, beispielsweise einem Zapfen, einer Welle oder einer Achse, zu befestigen. Neben der Anbindung des Rads ist es weiterhin vorgesehen, dass ein Bremselement 2 in Form einer Bremsscheibe drehfest mit der Radnabe 1 verbunden ist. Vorzugsweise handelt es sich um eine Radnabe 2 für ein Nutzfahrzeug. Insbesondere ist es vorgesehen, dass die Radnabe 1 einstückig bzw. integral ausgestaltet ist. D. h. an der einstückigen Radnabe 1 sind sowohl Primäraussparungen 21 zur Anbindung des Bremselement 2 an die Radnabe 1 und Sekundäraussparung 22 zur Anbindung des Rads an die Radnabe 1 vorgesehen. Wesentliche Bestandteile der integral ausgestalteten Radnabe 1 sind ein in radialer Richtung gesehen außenliegender Kragenbereich 12 und ein in radialer Richtung gesehen innenliegender Kernbereich 11, wobei der Kernbereich 11 dicker ist als der Kragenbereich 12. Vorzugsweise ist der Kragenbereich 12 im Wesentlichen ringscheibenförmig ausgestaltet, d. h. eine in axialer Richtung bemessene Dicke des Kragenbereichs 12 ist in radialer Richtung gesehen im Kragenbereich 12 im Wesentlichen konstant. Dabei ist insbesondere als Dicke eine bauraumfüllende Erstreckung des im Betrieb um die Rotationsachse A rotierenden Kragenbereichs 12 zu verstehen. Bei einer solchen Messung bleiben lokale Materialverdünnungen 18 in Umlaufrichtung U unberücksichtigt. Vorzugsweise sind solche lokalen Materialverdünnung 18 in Umlaufrichtung U gesehen in regelmäßigen bzw. äquidistanten Abständen in den Kragenbereich 12 eingelassen, um dadurch mit Vorteil das Gesamtgewicht der Radnabe 1 zu reduzieren. Beispielswiese sind die Materialverdünnungen 18 in Umlaufrichtung U zwischen zwei benachbarten Sekundäraussparungen 22 angeordnet. Hierbei sind die Materialverdünnungen 18 vorzugsweise Rücksprünge auf der Rückseite des Kragenbereichs 12, d. h. der Seite, die im montierten Zustand des Bremselements 2 zugewandt ist. Im Gegensatz zum Kragenbereich 12, ändert sich die in axialer Richtung bemessene Dicke des Kernbereichs 11 mit zunehmenden radialen Abstand von der Rotationsachse A. Vorzugsweise ist die Dicke des Kernbereichs 11 in dem Bereich maximal, in dem die Radnabe 1 im montierten Zustand an dem Achselement anliegt. Weiterhin ist es vorgesehen, dass der Kernbereich 11 sich im Wesentlichen radial erstreckende Rippenelemente 5 aufweist, wobei sich zwischen zwei benachbarten Rippenelementen 5 ein lichter Bereich 15 ausbildet. Insbesondere ist es vorgesehen, dass die Rippenelemente 5 derart ausgestaltet sind, dass sie in axialer Richtung gesehen bereichsweise parallel zur Rotationsachse A verlaufen und zum Kragenbereich 12 hin radial nach außen gebogen sind. Dadurch weitet die Radnabe 1 in axialer Richtung gesehen radial auf. In dem Bereich, in dem die Rippenelemente 5 im Wesentlichen parallel zur Rotationsachse A verlaufen, legen die Rippenelemente 5 mit Ihrer Außenseite eine Mantelaußenfläche 14 fest. Vorzugsweise ist es vorgesehen, dass ein Verhältnis zwischen einem Abstand A3 zwischen der Rotationsachse A und der Mantelaußenfläche und dem Durchmesser D der Radnabe 1 einen Wert zwischen 0,3 und 0,8, bevorzugt zwischen 0,45 und 0,75 besonders bevorzugt zwischen 0,48 und 0,58. Weiterhin ist es vorgesehen, dass ein Verhältnis zwischen einer Länge des Bereichs, in dem die Mantelaußenfläche im Wesentlichen parallel zur Rotationsachse A verläuft, und einer Gesamtlänge der Radnabe 1 in axialer Richtung einen Wert zwischen 0,2 und 0,5, bevorzugt zwischen 0,25 und 0,45 und besonders bevorzugt zwischen 0,32 und 0,42 an. Weiterhin ist es denkbar, dass der lichte Bereich 15 in radialer Richtung gesehen im Wesentlichen in einer Linie zur Materialverdünnung 18 angeordnet ist. Weiterhin ist es bevorzugt vorgesehen, dass das Rippenelement 5 mit einem ersten Ende unmittelbar an den Kragenbereich 12 anschließt und mit einem zweiten Ende in den Bereich übergeht, in der das Rippenelement 5 die parallel zur Rotationsachse A verlaufende Mantelaußenfläche 14 ausbildet.

Insbesondere ist es vorgesehen, dass die Primäraussparung 21, über die das Bremselement 2 an die Radnabe 1 angebunden wird, im Kernbereich 11, vorzugsweise in einem Bereich, der zwischen der Rotationsachse A und der Mantelaußenfläche 14 liegt, angeordnet ist. Hierbei verläuft die Primäraussparung 21 im Wesentlichen axial. Weiterhin ist es in der in Figur 1 dargestellten Ausführungsform vorgesehen, dass sich die Primäraussparung 21 über das ganze Rippenelement 5 erstreckt. Durch die Anordnung der Primäraussparung 21 im dickeren Kernbereich 11 lassen sich in vorteilhafter Weise größere Klemmlängen erzeugen, als wenn die Primäraussparung 21 zur Anbindung des Bremselements 2 im Kragenbereich 12 angeordnet ist. Mit dieser vergrößerten Klemmlänge geht mit Vorteil eine erhöhte Verspannkraft einher, die schließlich höhere Bremsmomente zulässt. Zudem lassen sich thermische Effekte durch diese konstruktive Anordnung der Primäraussparungen 21 vergleichsweise gut kompensieren.

Weiterhin ist es in der in Figur 1 dargestellten Ausführungsform vorgesehen, dass der Kernbereich 11 eine Bremselementanlagefläche 25 aufweist, in der die Primäraussparung 21 mündet. Die Bremselementanlagefläche 25 umfasst hierbei zusätzlich ein Formschlussmittel, das im montierten Zustand mit dem Bremselement 2 in Umlaufrichtung U gesehen zusammenwirkt. Vorliegend ist das Formschlussmittel 13 als Absatz 20 auf den Bremselementanlageflächen 20 ausgestaltet. Insbesondere handelt es sich um einen stufenförmigen Absatz 20. Dabei ragen die einzelnen Absätze 20 der Bremselementanlagefläche unterschiedlich weit radial in der Bremselementanlagefläche 25 hinein. Insbesondere ist es vorgesehen, dass den aufeinanderfolgenden Absätzen 20 ein Kantenverlauf 10 zuzuordnen ist. Dieser Kantenverlauf 10 wird im vorliegenden Ausführungsbeispiel durch die jeweils in radialer Richtung außenliegenden Kanten der Absätze 20 der in Umlaufrichtung U aufeinander folgenden Bremselementanlageflächen 25 festgelegt. Die gedachte Verbindung dieser außenliegenden Kanten bildet beispielsweise ein Kreis. Vorzugsweise ragen die einzelnen Absätze 20 der Bremselementanlageflächen 25 derart unterschiedlich weit in die Bremselementanlagefläche 25, dass der Kantenverlauf 10 gegenüber der Rotationsachse A exzentrisch ist. Insbesondere ist ein dem Kantenverlauf 10 zugeordneter Mittelpunkt M um eine Exzentrizität E zur Rotationsachse A versetzt, wobei ein Verhältnis zwischen der Exzentrizität E zur in radialer Richtung bemessenen Erstreckung D2 der Bremselementanlagefläche 25 einen Wert zwischen 0,2 und 0,8, bevorzugt zwischen 0,6 und 0,8 und besonders bevorzugt zwischen 0,7 und 0,8 annimmt. Dadurch bilden die einzelnen Absätze 20 in radialer Richtung außenliegende Formschlussflächen aus, die, insbesondere gegenüber der Umlaufrichtung U, schräg bzw. keilförmig über die jeweilige Bremselementanlagefläche 25 verlaufen. Folge ist, dass die Formschlussfläche mit einem komplementär zum Formschlussmittel ausgebildeten bremselementseitigen Formschlussmittel 40 in Umlaufrichtung U zusammenwirkt. Der schräge bzw. keilförmige Verlauf der einzelnen Formschlussflächen führt somit zu einer Kraftverstärkung beim Verdrehen des Bremselements 2, vorzugsweise beim Verdrehen um die Rotationsachse A. Zur Ausbildung der Kraftverstärkung ist es dabei insbesondere vorgesehen, dass der Verlauf der Formschlussfläche bzw. der Absätze abgestimmt ist mit einer Rotationsrichtung im Betrieb der Radnabe 1, damit beim Bremsen ein Bremsmoment von der Formschlussfläche aufgenommen werden kann.

Dadurch lassen sich gegenüber solchen Radnaben 1, die kein zusätzliches Formschlussmittel für den Formschluss in Umlaufrichtung aufweisen, höhere Bremsmomente aufnehmen und eine Belastung der axialen Fixierung des Bremselements 2 über in die Primäraussparungen 21 eingelassenen Befestigungsmittel 51 wird reduziert. Entsprechend können Anforderungen an die Befestigungsmittel 51, beispielsweise Schrauben, reduziert werden. Außerdem lässt sich durch die exzentrische Ausrichtung des über mehrere Absätze 20 fortgesetzten Kantenverlaufs 10 auch das Bremselement 2 gegenüber der Radnabe 1 orientieren, d. h. das Bremselement 2 lässt sich in Umlaufrichtung U gesehen in einer bestimmten Position bzw. Winkelposition gegenüber der Radnabe 1 fixieren.

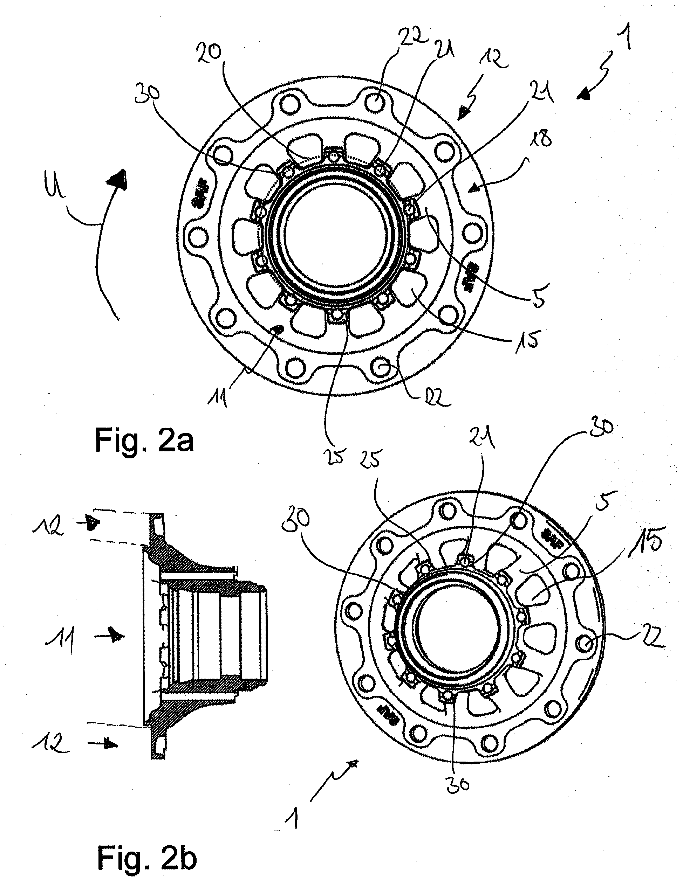

In den **Figuren 2a** **bis 2c** ist eine Radnabe 1 gemäß einer zweiten beispielhaften Ausführungsform der vorliegenden Erfindung dargestellt. Dabei sind in der Figur 2a eine Draufsicht in axialer Richtung und in der Figur 2b eine Schnittansicht längs der axialen Richtung (links) und eine perspektivische Ansicht (rechts) illustriert. Insbesondere unterscheidet sich die Radnabe 1 aus den Figuren 2a bis 2c von den Radnaben 1 aus den Figuren 1a bis 1c dahingehend, dass als Formschlussmittel 13 eine Nut 30 bzw. ein ringförmiger Bund statt eines Absatzes 20 vorgesehen ist. Dabei ist der Nut 30 bzw. der Bund exzentrisch gegenüber der Rotationsachse A der Radnabe 1 angeordnet, so dass der Nut 30 bzw. dem Bund jeweils zwei Kantenverläufe 10 mit den zu den Figuren 1a bis c beschriebenen Eigenschaften zugeordnet werden kann. Vorzugsweise ist es vorgesehen, dass ein Verhältnis zwischen einer Nutbreite und einer Nuttiefe einen Wert zwischen 0,5 und 3, bevorzugt zwischen 0,8 und 1,8 und besonders bevorzugt zwischen 0,9 und 1,23 annimmt.

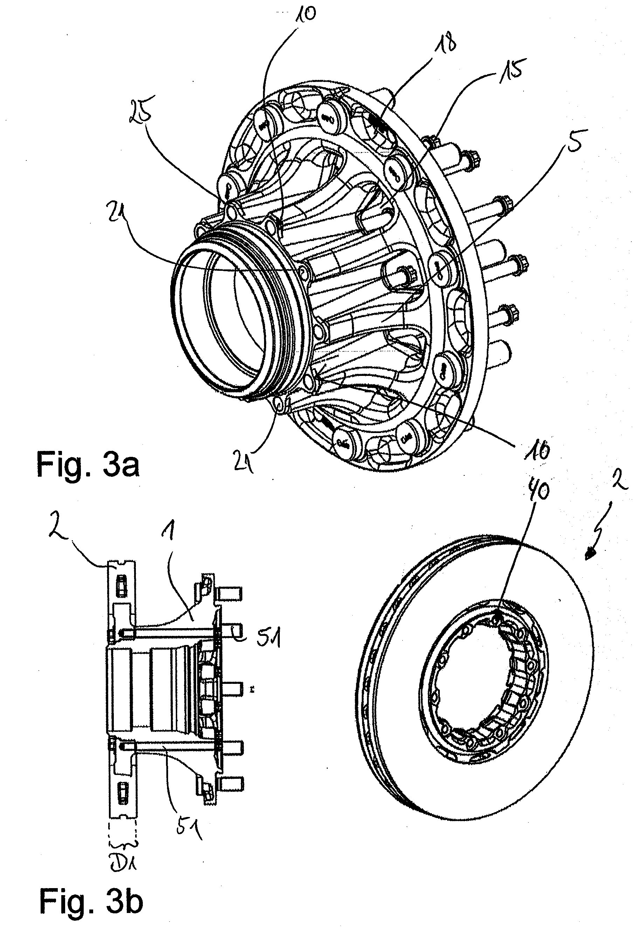

In den **Figuren 3a** **bis 3c** ist eine Radnabe 1 gemäß einer dritten beispielhaften Ausführungsform der vorliegenden Erfindung dargestellt. Dabei sind in der Figur 3a eine perspektivische und in der Figur 3b eine Schnittansicht längs der axialen Richtung (links) und eine perspektivische Ansicht des Bremselements (rechts) illustriert. Insbesondere unterscheidet sich die Radnabe 1 aus den Figuren 3a bis 3c von denen aus den Figuren 1a bis 1c dahingehend, dass sich das Formschlussmittel nicht über mehrere Bremselementanlageflächen 25 erstreckt, sondern jede einzelne Bremselementanlagefläche 25 eine Formschlussmittel 13 aufweist. Hierbei ist das Formschlussmittel 13 als Absatz 20 mit einem gebogenen Kantenverlauf 10 ausgestaltet. Vorzugsweise ist dem gebogenen Kantenverlauf 10 ein Kantenverlaufsradius zuzuordnen, wobei der Kantenverlaufsradius kleiner ist als eine in Umlaufrichtung bemessene Erstreckung der Bremselementanlagefläche 25. Dadurch kann die dem Kantenverlauf 10 zugeordnete Formschlussfläche in beiden Rotationsrichtungen, die die Radnabe 2 im Betrieb einnehmen kann, formschlüssig mit der Radnabe 1 zusammenwirken. Insbesondere ist es vorgesehen, dass das bremselementseitige Formschlussmittel 40 zu den Absätzen 20 der Radnabe 1 komplementär ausgestaltete Rücksprünge aufweist.

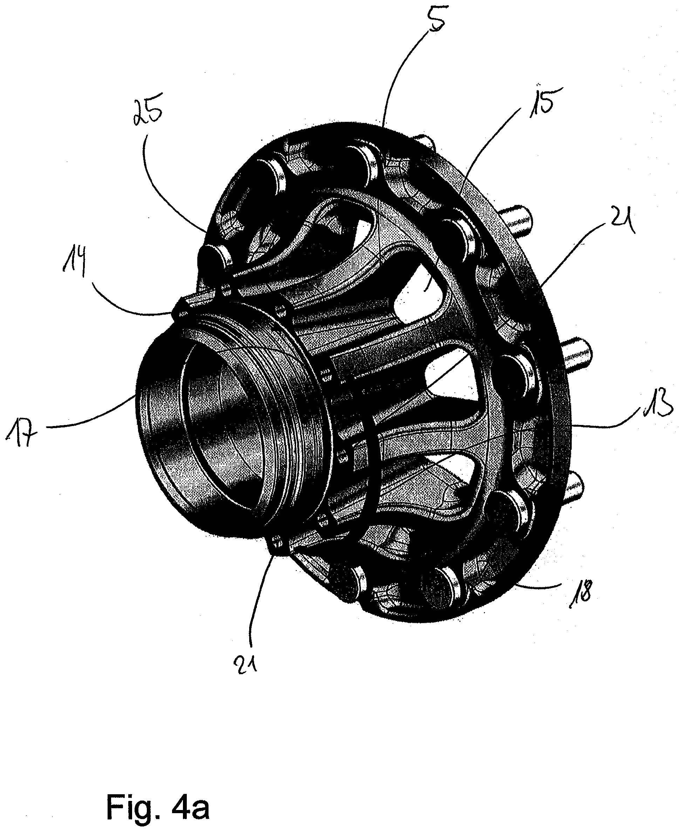

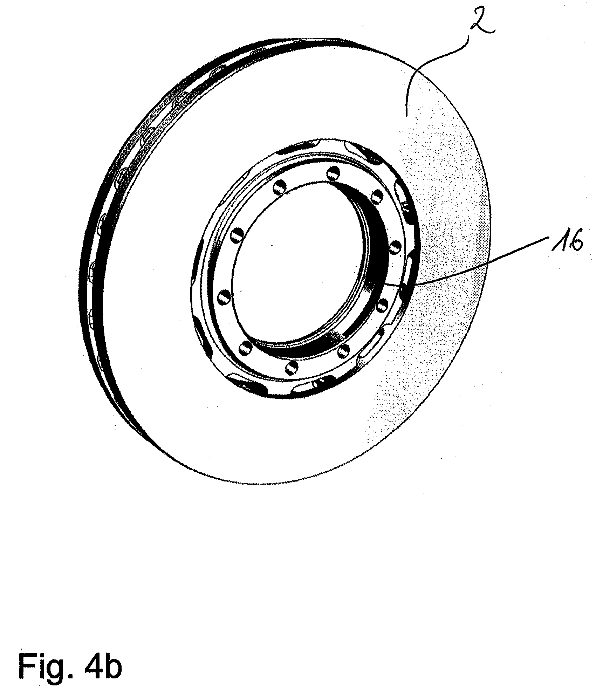

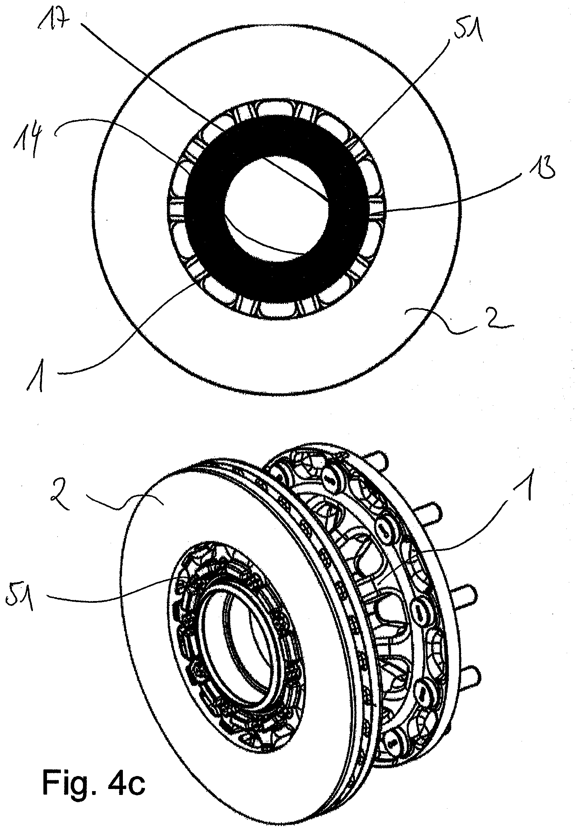

In den **Figuren 4a bis 4c** ist eine Radnabe 1 gemäß einer vierten beispielhaften Ausführungsform der vorliegenden Erfindung dargestellt. Dabei unterscheidet sich die Ausführungsform der Figuren 4a bis 4c insbesondere nur dahingehend, dass das Formschlussmittel 13 nicht in den Bremselementanlageflächen ausgebildet ist, sondern ein Aufnahmebereich 14 für ein Formschlussmittel 13 vorgesehen ist. Dieser Aufnahmebereich 14 ist vorzugsweise als in Umlaufrichtung U verlaufender Einstich, vorzugsweise in einem axial an die Bremselementanlageflächen 25 angrenzenden Bereich, in der Radnabe 1 ausgestaltet. Dabei erstreckt sich der Aufnahmebereich 14 in Umlaufrichtung U gesehen über mehrere Bremselementanlageflächen 25. Insbesondere ist es vorgesehen, dass ein Verhältnis zwischen einer sich in Umlaufrichtung U bemessene Länge des Aufnahmebereichs 14 zum Gesamtumfang der Radnabe auf derselben Höhe einen Wert zwischen 0,2 und 0,7, bevorzugt zwischen 0,4 und 0,6 und besonders bevorzugt zwischen 0,45 und 0,55 annimmt. Der als Rücksprung bzw. Einstich in der Radnabe 1 ausgestaltete Aufnahmebereich 14 weist eine Bodenfläche 17 auf, der ein Kantenverlauf 10 zuzuordnen ist, der wiederum exzentrisch zur Rotationsachse 10 verläuft. Im montierten Zustand ist im Aufnahmebereich 14 das Formschlussmittel 13 angeordnet. In dem dargestellten Ausführungsbeispiel ist das Formschlussmittel 13 als gebogenes Keilelement ausgestaltet, das zu seinen in Umlaufrichtung gesehenen Enden hin verjüngt. Während die Figur 4a den Aufnahmebereich 14 für das Formschlussmittel 13 und das separate Formschlussmittel 13 zeigt, lässt die Figur 4b einen bremselementseitigen Aufnahmebereich 16 erkennen, in den das Formschlussmittel 13 im montierten Zustand mit seiner von der Radnabe 1 abgewandten Seite eingreift. Die Figur 4c illustriert schließlich die Radnabe 1 im montierten Zustand in einer Draufsicht und einer perspektivischen Ansicht. Wie die Draufsicht erkennen lässt, ist das Formschlussmittel 13 im montierten Zustand vorzugsweise zwischen der Radnabe 1 und dem Bremselement 2 angeordnet. Durch den keilförmigen Verlauf des Formschlussmittels 13 lässt sich in vorteilhafter Weise, wie es bei den Ausführungsformen aus den Figuren 1a bis 1c sowie 2a bis 2c der Fall, die gewünschte Kraftverstärkung beim Verdrehen des Bremselements 2 veranlassen.

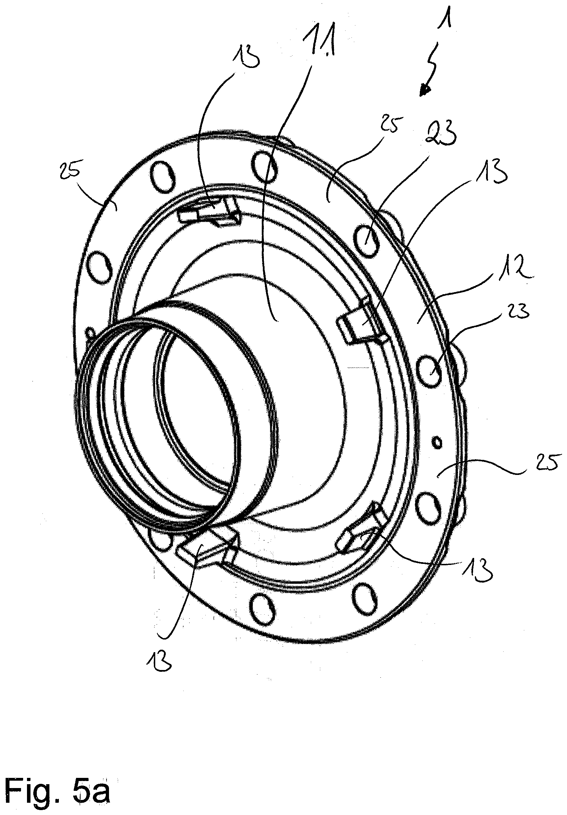

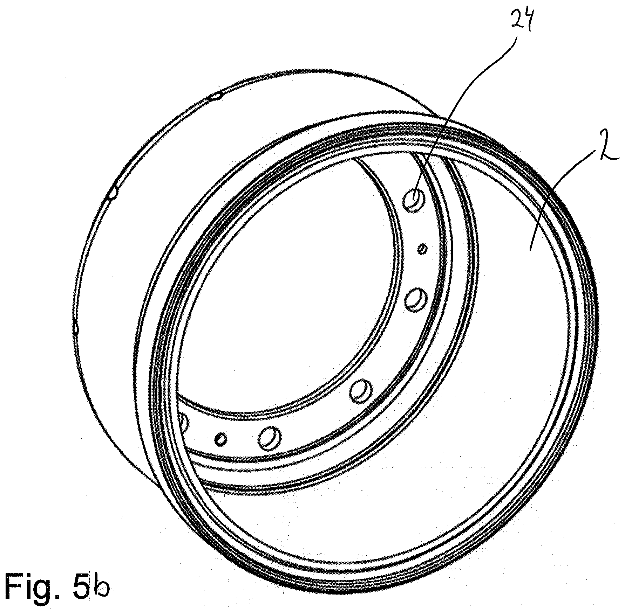

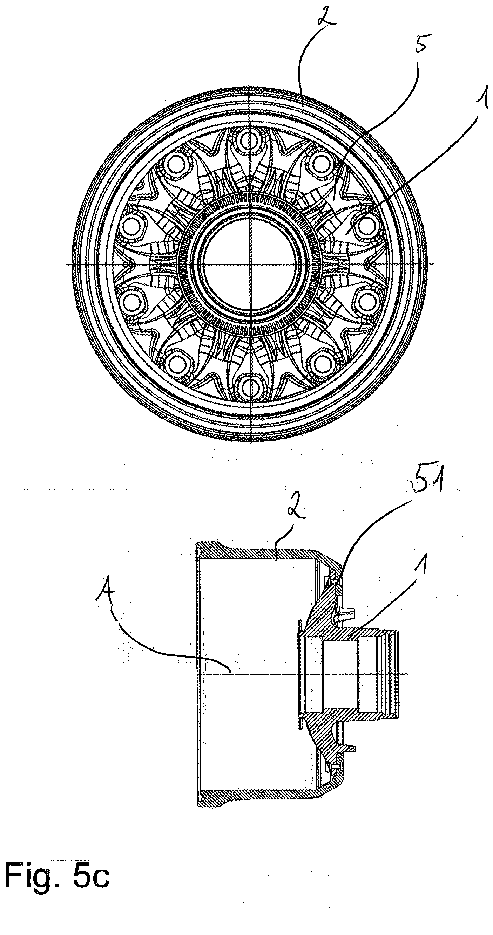

In den **Figuren 5a bis 5c** ist eine Radnabe 1 gemäß einer vierten beispielhaften Ausführungsform der vorliegenden Erfindung dargestellt. Im Gegensatz zu den Ausführungsformen der vorangegangenen Figuren ist in der dargestellten Ausführungsform eine Bremstrommel als Bremselement 2 vorgesehen. Dabei zeigt die Figur 5a die Radnabe 1 und die Figur 5b die Bremstrommel jeweils im Detail, während in der Figur 5c das zusammengesetzte System aus Bremstrommel und Radnabe 1, in einer Draufsicht (oben) und einer Schnittansicht (unten) dargestellt ist.

Vorzugsweise sind zur Anbindung des Bremselements 2, d. h. hier der Bremstrommel, Tertiäraussparungen 23 vorgesehen, die in den Kragenbereich 13 der Radnabe 1 eingelassen sind. Insbesondere ist es vorgesehen, dass der Kragenbereich 13 die Bremselementanlagefläche 25 für die Bremstrommel, insbesondere für einen zur Rotationsachse A nach innen gewandten Kragen der Bremstrommel, umfasst. Vorzugsweise ist die Bremselementanlagenfläche 25 in Umlaufrichtung gesehen geschlossen, d. h. nicht unterbrochen, ausgestaltet. Als Formschlussmittel 13 sind ferner im montierten Zustand axial vom Kragenbereich 13 der Radnabe 1 abstehende Stege vorgesehen, die insbesondere in Umlaufrichtung U gesehen zwischen zwei Tertiäraussparungen 23 angeordnet sind. Dabei sind die Stege vorzugsweise derart ausgeformt, dass zur Kraftverstärkung bei einer Verdrehung des Bremselements 2 die Formschlussmittel 13, d. h. die Stege, ein sich in Umlaufrichtung U erstreckenden von der Rotationsachse A abgewandten Kantenverlauf 10, der exzentrisch zur Rotationsachse A verläuft, aufweist. Dabei ist unter Kantenverlauf 10 insbesondere ein sich über mehrere Stege erstreckender, gemeinsamer Kantenverlauf 10 auf der der Rotationsachse A abgewandten Seite der Stege, die in Umlaufrichtung aufeinanderfolgen, zu verstehen. Weiterhin ist es vorgesehen, dass im montierten Zustand die Stege in axialer Richtung gegenüber dem an der Bremselementanlagefläche 25 anliegenden Kragen der Bremstrommel vorstehen. Denkbar ist auch, dass die Außenseiten der Stege gegenüber der Rotationsachse A schräg verlaufen, um bei der Montage der Bremstrommel diese zu führen und so das Aufziehen der Bremstrommel zu vereinfachen. Weiterhin ist es vorgesehen, dass die Tertiäraussparungen 23 in Umlaufrichtung U gesehen zwischen zwei Rippenelementen 5 angeordnet sind.

### Bezugszeichen:

- 1: Radnabe
- 2: Bremselement
- 5: Rippenelement
- 10: Kantenverlauf
- 11: Kernbereich
- 12: Kragenbereich
- 13: Formschlussmittel
- 14: Aufnahmebereich
- 15: lichter Bereich
- 16: bremselementseitiger Aufnahmebereich
- 17: Bodenfläche
- 18: Materialverdünnung
- 20: Absatz
- 21: Primäraussparung
- 22: Sekundäraussparung
- 23: Tertiäraussparung
- 25: Bremselementanlagefläche
- 30: Nut
- 40: bremselementseitiges Formschlussmittel
- 51: Befestigungsmittel
- A: Rotationsachse
- D1: Dicke des Bremselement
- D2: Erstreckung der Bremselementanlagefläche

## Patentansprüche

1. Radnabe (1), insbesondere Radnabe (1) für ein Nutzfahrzeug, umfassend
- eine Bremselementanlagefläche (25), an der in einem montierten Zustand ein Bremselement (2), insbesondere eine Bremsscheibe oder eine Bremstrommel, anliegt, und
- ein Formschlussmittel (13), das im montierten Zustand in Umlaufrichtung (U) gesehen formschlüssig mit dem Bremselement (2) zusammenwirkt, und/oder
- einen Aufnahmebereich (14) für ein Formschlussmittel (13), das im montierten Zustand in Umlaufrichtung (U) gesehen formschlüssig mit dem Bremselement (2) zusammenwirkt,
wobei eine Primäraussparung (21) zur axialen Fixierung des Bremselements (2) vorgesehen ist,
wobei die Primäraussparung (21) in der Bremselementanlagefläche (25) mündet.

2. Radnabe (1) gemäß Anspruch 1, wobei das Formschlussmittel (13) im Bereich der Bremselementanlagefläche (25) angeordnet ist oder Teil der Bremselementanlagefläche (25) ist.

3. Radnabe (1) gemäß einem der vorhergehenden Ansprüche, wobei das Formschlussmittel (13) als Absatz (20), als Bund und/oder als Nut (30) in der Radnabe (1), insbesondere in der Bremselementanlagefläche (25), ausgebildet ist.

4. Radnabe (1) gemäß Anspruch 3, wobei sich ein gemeinsamer Kantenverlauf (10) entlang der Umlaufrichtung (U) gesehen über mehrere Absätze (20) erstreckt.

5. Radnabe (1) gemäß einem der vorhergehenden Ansprüche, wobei zur Kraftverstärkung bei einer Verdrehung des Bremselements (2), insbesondere um eine Rotationsachse (A), das Formschlussmittel (13) ein sich in Umlaufrichtung erstreckenden Kantenverlauf (10), der exzentrisch zur Rotationsachse (A) verläuft, aufweist.

6. Radnabe (1) gemäß Anspruch 5, wobei der Kantenverlauf (10) die Rotationsachse (A) zumindest bereichsweise umschließt.

7. Radnabe (1) gemäß Anspruch 5 oder 6, wobei ein dem Kantenverlauf (10) zugeordneter Mittelpunkt (M) um eine Exzentrizität (E) zur Rotationsachse (A) versetzt ist.

8. Radnabe gemäß Anspruch 7, wobei ein Verhältnis zwischen der Exzentrizität (E) zur in radialer Richtung bemessenen Erstreckung der Bremselementanlagefläche (25) einen Wert zwischen 0,2 und 0,8, bevorzugt zwischen 0,6 und 0,8 und besonders bevorzugt zwischen 0,7 und 0,8 annimmt.

9. Radnabe (1) gemäß einem der vorhergehenden Ansprüche, wobei die Radnabe (1) eine Mehrzahl von Primäraussparungen (21) aufweist, wobei die Primäraussparungen (21) auf einer Kreisbahn angeordnet sind, und wobei diese Kreisbahn exzentrisch zur Rotationsachse (A) ausgebildet ist.

10. Radnabe (1) gemäß einem der vorhergehenden Ansprüche, weiter umfassend einen in radialer Richtung gesehen außenliegenden Kragenbereich (12) und einen in radialer Richtung gesehen innenliegenden Kernbereich (11), wobei in axialer Richtung gesehen der innenliegende Kernbereich (11) dicker als der außenliegenden Kragenbereich (12) ist, und
wobei die Radnabe (11) im innenliegenden Kernbereich (11) die im Wesentlichen axial verlaufende Primäraussparung (21) zur Anbindung eines Bremselements (2) aufweist.

11. Radnabe gemäß Anspruch 10, wobei der Kernbereich (11) im Wesentlichen radial verlaufende Rippenelemente (5) umfasst.

12. Radnabe (1) gemäß einem der vorhergehenden Ansprüche, wobei die Radnabe einstückig bzw. integral ausgebildet ist

13. System aus einer Bremselement (2) und einer Radnabe (1) gemäß Anspruch 1, insbesondere eine Radnabe (1) für ein Nutzfahrzeug, wobei das Formschlussmittel (13) im montierten Zustand mit einem bremselementseitigen Formschlussmittel (40), insbesondere einem zum Formschlussmittel der Radnabe komplementär ausgestalteten bremselementseitigen Formschlussmittel (40), zusammenwirkt.

## Claims

1. Wheel hub (1), in particular wheel hub (1) for a commercial vehicle, comprising
- a brake element contact surface (25) against which a brake element (2), in particular a brake disc or a brake drum, rests in a mounted state, and
- a form-fitting means (13) which, in the assembled state, as seen in the direction of rotation (U), interacts positively with the brake element (2), and/or
- a receiving region (14) for a positive-locking means (13) which, in the assembled state, as seen in the direction of rotation (U), interacts positively with the brake element (2),
wherein a primary recess (21) is provided for axially fixing the brake element (2),
wherein the primary recess (21) opens into the braking element contact surface (25).

2. Wheel hub (1) according to claim 1, wherein the positive locking means (13) is arranged in the region of the brake element contact surface (25) or is part of the brake element contact surface (25).

3. Wheel hub (1) according to one of the preceding claims, wherein the form-fitting means (13) is formed as a shoulder (20), a collar and/or a groove (30) in the wheel hub (1), in particular in the brake element contact surface (25).

4. Wheel hub (1) according to claim 3, wherein a common edge run (10), viewed along the direction of rotation (U), extends over several shoulders (20).

5. Wheel hub (1) according to one of the preceding claims, wherein for force amplification during a rotation of the brake element (2), in particular about an axis of rotation (A), the form-fitting means (13) has an edge course (10) which extends in the direction of rotation and runs eccentrically to the axis of rotation (A).

6. Wheel hub (1) according to claim 5, wherein the edge course (10) encloses the axis of rotation (A) at least in regions.

7. Wheel hub (1) according to claim 5 or 6, wherein a centre point (M) associated with the edge path (10) is offset by an eccentricity (E) relative to the axis of rotation (A).

8. Wheel hub according to claim 7, wherein a ratio between the eccentricity (E) and the radially dimensioned extension of the brake element contact surface (25) assumes a value between 0.2 and 0.8, preferably between 0.6 and 0.8 and particularly preferably between 0.7 and 0.8.

9. Wheel hub (1) according to one of the preceding claims, wherein the wheel hub (1) has a plurality of primary recesses (21), wherein the primary recesses (21) are arranged on a circular path, and wherein this circular path is formed eccentrically to the axis of rotation (A).

10. A wheel hub (1) according to any one of the preceding claims, further comprising a radially outer collar portion (12) and a radially inner core portion (11),
wherein, seen in the axial direction, the inner core region (11) is thicker than the outer collar region (12), and
wherein the wheel hub (11) has in the inner core region (11) the primary recess (21), which extends substantially axially, for connecting a brake element (2).

11. Wheel hub according to claim 10, wherein the core area (11) comprises substantially radially extending rib elements (5).

12. Wheel hub (1) according to one of the preceding claims, wherein the wheel hub is integrally formed

13. System comprising a brake element (2) and a wheel hub (1) according to claim 1, in particular a wheel hub (1) for a commercial vehicle,
wherein, in the assembled state, the positive-locking means (13) cooperates with a positive-locking means (40) on the brake element side, in particular a positive-locking means (40) which is designed to be complementary to the positive-locking means of the wheel hub.

## Revendications

1. Moyeu de roue (1), en particulier moyeu de roue (1) pour un véhicule utilitaire, comprenant
- une surface d'appui d'élément de frein (25), sur laquelle s'appuie, à l'état monté, un élément de frein (2), en particulier un disque de frein ou un tambour de frein, et
- un moyen de coopération de forme (13) qui, à l'état monté, vu dans la direction de révolution (U), coopère par coopération de forme avec l'élément de frein (2), et/ou
- une zone de réception (14) pour un moyen de coopération de forme (13) qui, à l'état monté, vu dans la direction de révolution (U), coopère par coopération de forme avec l'élément de frein (2),
dans lequel
un évidement primaire (21) est prévu pour la fixation axiale de l'élément de frein (2),
l'évidement primaire (21) débouche dans la surface d'appui d'élément de frein (25).

2. Moyeu de roue (1) selon la revendication 1,
dans lequel le moyen de coopération de forme (13) est disposé dans la zone de la surface d'appui d'élément de frein (25) ou fait partie de la surface d'appui d'élément de frein (25).

3. Moyeu de roue (1) selon l'une des revendications précédentes,
dans lequel le moyen de coopération de forme (13) est réalisé sous la forme d'un épaulement (20), d'une collerette et/ou d'une rainure (30) dans le moyeu de roue (1), en particulier dans la surface d'appui d'élément de frein (25).

4. Moyeu de roue (1) selon la revendication 3,
dans lequel un tracé de bord (10) commun, vu le long de la direction de révolution (U), s'étend sur plusieurs épaulements (20).

5. Moyeu de roue (1) selon l'une des revendications précédentes,
dans lequel, pour amplifier la force en cas de torsion de l'élément de frein (2), en particulier autour d'un axe de rotation (A), le moyen de coopération de forme (13) présente un tracé de bord (10) s'étendant dans la direction de révolution, qui est excentré par rapport à l'axe de rotation (A).

6. Moyeu de roue (1) selon la revendication 5,
dans lequel le tracé de bord (10) entoure l'axe de rotation (A) au moins localement.

7. Moyeu de roue (1) selon la revendication 5 ou 6,
dans lequel un centre (M) associé au tracé de bord (10) est décalé d'une excentricité (E) par rapport à l'axe de rotation (A).

8. Moyeu de roue selon la revendication 7,
dans lequel le rapport entre l'excentricité (E) et l'extension radiale de la surface d'appui d'élément de frein (25), mesurée dans la direction radiale, prend une valeur comprise entre 0,2 et 0,8, de préférence entre 0,6 et 0,8 et de manière particulièrement préférée entre 0,7 et 0,8.

9. Moyeu de roue (1) selon l'une des revendications précédentes,
dans lequel le moyeu de roue (1) présente une pluralité d'évidements primaires (21), les évidements primaires (21) étant disposés sur une trajectoire circulaire, et cette trajectoire circulaire est excentrée par rapport à l'axe de rotation (A).

10. Moyeu de roue (1) selon l'une des revendications précédentes, comprenant en outre une zone de collerette (12) extérieure, vue dans la direction radiale, et une zone de coeur (11) intérieure, vue dans la direction radiale, la zone de coeur (11) intérieure étant plus épaisse que la zone de collerette (12) extérieure, vue dans la direction axiale, et
le moyeu de roue (11) présentant, dans la zone de coeur (11) intérieure, l'évidement primaire (21) s'étendant sensiblement axialement pour attacher un élément de frein (2).

11. Moyeu de roue selon la revendication 10,
dans lequel la zone de coeur (11) comprend des éléments nervurés (5) s'étendant sensiblement radialement.

12. Moyeu de roue (1) selon l'une des revendications précédentes,
dans lequel le moyeu de roue est formé d'un seul tenant ou intégralement.

13. Système constitué d'un élément de frein (2) et d'un moyeu de roue (1) selon la revendication 1, en particulier d'un moyeu de roue (1) pour un véhicule utilitaire,
dans lequel, à l'état monté, le moyen de coopération de forme (13) coopère avec un moyen de coopération de forme (40) côté élément de frein, en particulier avec un moyen de coopération forme (40) côté élément de frein de configuration complémentaire au moyen de coopération forme du moyeu de roue.
